Europäisches Patentamt

(19) European Patent Office

Office européen des brevets

(11) Numéro de publication: **0 264 319**
**A1**

(12) ## DEMANDE DE BREVET EUROPEEN

(21) Numéro de dépôt: **87402143.9**

(51) Int. Cl.⁴: **H 04 N 1/46**

(22) Date de dépôt: **25.09.87**

(30) Priorité: **30.09.86 FR 8613567**

(43) Date de publication de la demande:
**20.04.88 Bulletin 88/16**

(84) Etats contractants désignés:
**AT BE CH DE GB IT LI NL SE**

(71) Demandeur: **Lesouef, Serge Philippe**
**78, rue des Grands Champs**
**F-75020 Paris (FR)**

(72) Inventeur: **Lesouef, Serge Philippe**
**78, rue des Grands Champs**
**F-75020 Paris (FR)**

(74) Mandataire: **Vander-Heym, Serge**
**CABINET R. VANDER-HEYM 172, Boulevard Voltaire**
**F-75011 Paris (FR)**

(54) **Procédé pour obtenir des impressions dégradées en imprimerie.**

(57) Procédé pour obtenir des impressions dégradées en imprimerie à l'aide d'un scanner usuel consistant à injecter dans le scanner (1) des signaux identiques à ceux qu'il aurait générés s'il avait analysé un document.
On stocke dans une mémoire (10) les informations correspondant aux valeurs densitométriques des pixels nécessaires pour reproduire une ligne verticale du dégradé à obtenir et on lit cycliquement cette mémoire au rythme du scanner (1).

## Description

La présente invention est relative à un procédé pour obtenir des impressions dégradées en imprimerie.

Lorsqu'en imprimerie on veut reproduire un document en couleurs, on sépare les couleurs et, pour chacune d'elles, on réalise un film qui permettra d'obtenir les plaques d'impression.

Comme en imprimerie, on utilise des encres qui filtrent la lumière blanche, l'oeil verra sur le papier la couleur de la lumière qui est passée à travers l'encre.

Lors de l'impression, si on superpose deux encres, l'oeil verra la couleur commune qui traversera les deux filtres.

Ainsi, si on superpose une tache de cyan et une tache de jaune, l'oeil verra une couleur verte sur le papier.

Pratiquement, on réalise quatre films correspondant aux trois couleurs complémentaires (jaune, cyan, magenta) et au noir.

Un des problèmes posés pour reproduire un document en couleur consiste donc à le décomposer. Ce résultat est obtenu à l'aide d'un appareil analysant les couleurs et communément appelé " scanner" par les professionnels.

Le scanner décompose la lumière colorée transmise par le document en couleurs primaires ( rouge, vert, violet) à l'aide de trois filtres. La lumière qui traverse chacun des filtres est appliquée à un composant, dit "photo multiplicateur", qui transforme le signal lumineux en un courant électrique proportionnel à la lumière reçue, puis ce signal est appliqué à un pré-amplificateur qui transforme le courant en tension électrique. Cette tension est finalement transformée en son logarithme inverse. A ce moment, la tension représente la densité de la couleur complémentaire de celle du filtre d'entrée. Ces informations sont traitées par le scanner qui, à l'aide de celles-ci, réalise les films précités.

En imprimerie, on a souvent besoin de réaliser des "impressions dégradées", c'est-à-dire des surfaces colorées dont l'intensité s'atténuera selon une direction afin d'obtenir des effets visuels spéciaux.

Compte tenu de ce qui a été expliqué ci-dessus, il est donc nécessaire de réaliser une maquette qui soit la reproduction exacte du dégradé à obtenir et qui sera analysé par le scanner.

La réalisation de cette maquette est confiée à un dessinateur professionnel.

De ce fait, cette technique est très coûteuse et le résultat obtenu dépend essentiellement de l'habileté du dessinateur. A cela s'ajoute le fait qu'il est pratiquement impossible de réaliser deux maquettes identiques.

Le procédé de l'invention, qui remédie à ces inconvénients, consiste à injecter dans le scanner des signaux identiques à ceux qu'il aurait générés si ce dernier avait analysé un document.

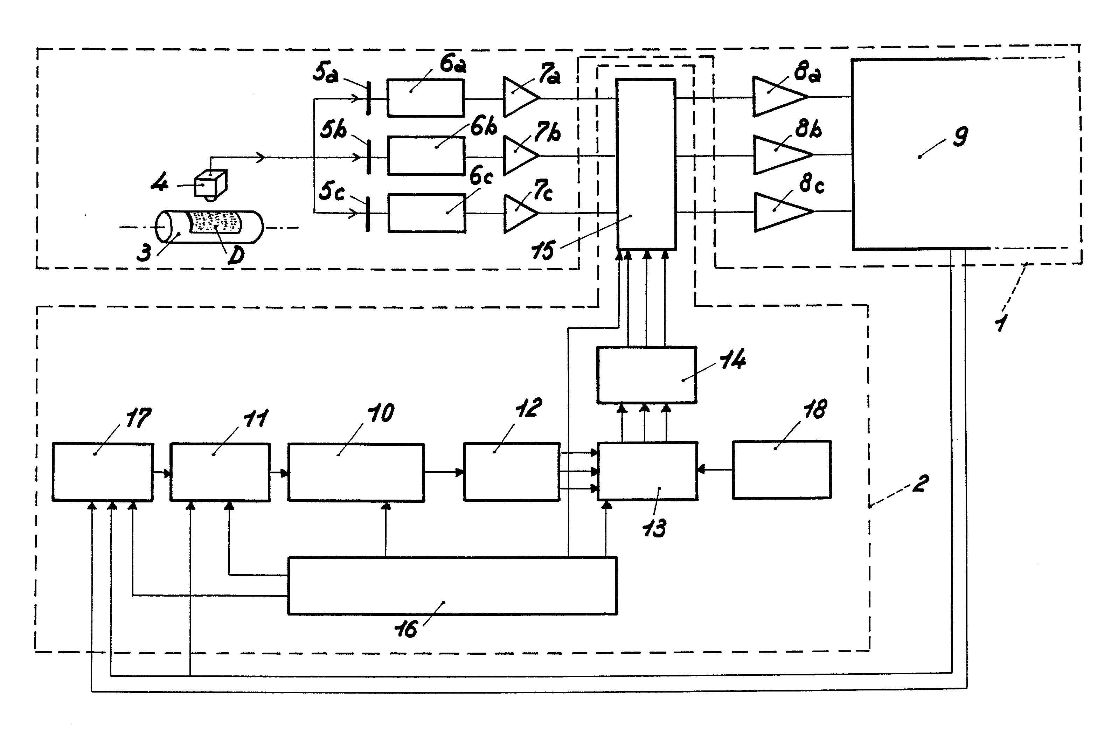

L'invention sera mieux comprise par la description qui va suivre, faite en se référant au dessin annexé à titre d'exemple indicatif seulement, sur lequel la figure unique est un schéma synoptique montrant la mise en oeuvre de l'invention sur un scanner usuel, dont une partie seulement est représentée.

Sur le dessin, le cadre 1 délimite les éléments d'un scanner usuel et celui 2 les éléments permettant la mise en oeuvre du procédé de l'invention.

De la façon connue, le document à analyser, tel qu'une diapositive en couleurs D, est placé sur un cylindre 3 qui tourne devant une tête de lecture 4 qui se déplace parallèlement à l'axe dudit cylindre. Le document est donc analysé en bandes verticales et parallèles. En fait, l'analyse s'effectue hélicoïdalement mais, en pratique, on néglige le pas de l'hélice et on considère que l'analyse s'effectue selon des bandes verticales juxtaposées.

La tête 4 dirige la lumière colorée transmise par le document, vers trois filtres 5a, 5b, 5c correspondant respectivement aux trois couleurs primaires : rouge, vert et violet, chacun des filtres ne laissant passer que la couleur qui le concerne.

A la sortie de chacun des filtres, la lumière monochromatique est appliquée à un composant, respectivement 6a, 6b, 6c, dénommé photo-multiplicateur qui transforme celle-ci en un courant électrique proportionnel à la lumière reçue.

Des préamplificateurs 7a, 7b, 7c transforment ces courants en tensions.

Comme il existe une relation logarithmique entre la lumière transmise par le document et la sensation visuelle, les tensions précitées sont transformées à l'aide de trois amplificateurs 8a, 8b, 8c. Il existe aussi des composants électroniques capables de reproduire cette relation.

Chaque tension, à la sortie des amplificateurs 8 est représentative de la densité de la couleur complémentaire de celle du filtre d'entrée.

Ces tensions sont ensuite digitalisées puis exploitées par les étages suivants du scanner, schématisé par le carré 9 sur le dessin, jusqu'à l'obtention de films qui permettront de réaliser les plaques d'imprimerie. Le film correspondant au noir est réalisé par le scanner, celui-ci "imprimant" du noir dès qu'il constate que les trois tensions sont égales.

Ces scanners peuvent générer des films permettant d'imprimer un dégradé, mais en l'état actuel de la technique, il est nécessaire de posséder un document qu'on soumet à l'analyse du scanner, avec tous les inconvénients que cela présente.

Le procédé de l'invention consiste à substituer aux signaux de sortie des préamplificateurs 7a, 7b, 7c des signaux créés artificiellement et stockés dans une mémoire 10.

On a vu que l'analyse d'un document s'effectue par "lignes verticales". Dès lors, il suffit de mettre en mémoire les informations correspondant aux valeurs densitométriques des pixels nécessaires pour reproduire une ligne verticale et de lire cette mémoire cycliquement et à une certaine vitesse pour générer un signal représentant l'analyse du dégradé à réaliser.

La mémoire 10 est constituée, en fait, de plusieurs mémoires élémentaires correspondant chacune à des lignes type. En général, ces lignes sont l'image de la représentation graphique de fonctions mathématiques simples.

La mémoire 10 est placée sous la dépendance d'un déclancheur 11, commandé par l'horloge usuelle du scanner de façon à obtenir une lecture synchronisée de la mémoire.

Le signal numérique qui sort de la mémoire 10 est appliqué à un convertisseur 12 qui le transforme en trois signaux analogiques pour simuler les trois couleurs à transmettre, ces signaux sont des tensions électriques, identiques, correspondant à un dégradé type dont la densité varie de 0 à 100%, ce qui correspond, par exemple, à une tension variant de 0 à 10v.

Ces trois tensions sont appliquées à un dispositif de réglage 13 permettant de modifier la valeur minimale ou celle maximale de chaque signal pour simuler les couleurs à transmettre étant entendu que la loi de variation entre les deux valeurs extrêmes n'est pas modifiée.

Cet étage est donc celui qui permet de choisir la couleur du dégradé et, à la sortie de celui-ci, chaque signal représente l'une des trois composantes de la couleur à obtenir.

Ce dispositif de réglage permet aussi de faire varier les deux valeurs extrêmes du signal.

Ces signaux sont l'image de la densité de couleur du dégradé à obtenir.

Pour des raisons de commodité résultant de la conception des scanners connus et afin, surtout, de ne pas modifier ces machines, les signaux délivrés par le générateur de dégradés, objet de l'invention, doivent être injectés dans le scanner entre les préamplificateurs 7a, 7b, 7c et les amplificateurs 8a, 8b, 8c.

Pour atteindre ce résultat, il est donc nécessaire de transformer les signaux à la sortie du dispositif de réglage 13. C'est le but de convertisseur 14 qui, à un coefficient près, transforme chaque signal en son expotentielle inverse.

L'injection des signaux dans le scanner s'effectue par l'entremise d'un multiplexeur 15.

Le générateur de dégradés 2 est complété par un boîtier de commande 16, par un circuit de retard 17 et par un générateur de bruit 18.

Le circuit 17 a essentiellement pour fonction de retarder l'instant à partir duquel la mémoire est lue et ce, pour compenser des problèmes inhérents au scanner.

Le générateur de bruit a pour fonction de compenser un inconvénient provenant de la conversion, par le scanner, d'un signal analogique en un signal numérique.

En effet, une telle conversion s'effectue par des approximations successives, en d'autres termes, un signal analogique dont la représentation serait une droite, donnerait après conversion, une courbe en marches d'escalier.

Dans les faits, cela va se traduire par la génération de films présentant des bandes horizontales très rapprochées mais décelables par l'oeil. Un tel dégradé n'est techniquement pas acceptable.

Le générateur de bruit permet de superposer, à chacun des signaux analogiques produits par le dispositif de réglage, un signal de fréquence aléatoire et de faible amplitude par rapport à celle desdits signaux (rapport de 1 à 10 par exemple).

De ce fait, et si on reprend l'exemple précédent, l'image du signal digitalisé sera un "escalier irégulier".

Bien que ce signal soit cyclique ( la mémoire 10 est lue au rythme du scanner), deux cycles consécutifs n'auront donc pas la même représentation graphique et, de ce fait, le défaut ci-dessus (effet de bandes parallèles) sera évité.

## Revendications

1-Procédé pour obtenir des impressions dégradées en imprimerie à l'aide d'un scanner usuel consistant à injecter dans le scanner (1) des signaux identiques à ceux qu'il aurait générés s'il avait analysé un document.

2-Procédé pour obtenir des impressions dégradées en imprimerie, selon la revendication 1, consistant à stocker dans une mémoire (10) les informations correspondant aux valeurs densitométriques des pixels nécessaires pour reproduire une ligne verticale du degradé à obtenir et à lire cycliquement cette mémoire au rythme du scanner (1).

3-Procédé pour obtenir des impressions dégradées en imprimerie, selon les revendications 1 et 2, consistant à injecter les signaux dans le scanner par l'entremise d'un multiplexeur (15) disposé à la sortie des éléments du scanner produisant des signaux de même nature.

4-Procédé pour obtenir des impressions dégradées en imprimerie, selon la revendication 3, consistant à injecter dans le scanner des signaux analogiques et à connecter le multiplexeur (15) à la sortie des préamplificateurs (7a, 7b et 7c) du scanner (1).

5-Procédé pour obtenir des impressions dégradées en imprimerie, selon l'une quelconque des revendications 1 à 4, consistant à l'aide d'un convertisseur (12) à transformer le signal numérique issu de la mémoire (10) en un signal analogique qui est appliqué à un dispositif de réglage (13) produisant trois signaux variant selon la même loi que celle du signal d'entrée et représentant l'une des composantes permettant d'obtenir la couleur du dégradé désiré et consistant, à l'aide d'un convertisseur (14), à transformer ces signaux, qui sont l'image de la densité d'un document dégradé fictif, en des signaux qui seraient l'image de la lumière transmise par ce document et à introduire ces signaux dans le scanner par l'entremise d'un multiplexeur (15).

6-Procédé pour obtenir des impressions dégradées en imprimerie, selon la revendication 5, consistant à l'aide d'un générateur de bruit (18) à superposer aux signaux qui entrent dans le convertisseur (14) des signaux dont la fréquence est aléatoire.

0264319

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 444 288 (HELL)<br>* Page 6, ligne 25 - page 7, ligne 25 * | 1,3 | H 04 N 1/46 |
| A | | 5 | |
| | --- | | |
| Y | GB-A-2 132 052 (DAINIPPON SCREEN)<br>* Page 2, lignes 45-64; page 3, ligne 25 - page 4, ligne 21 * | 1,3 | |
| A | | 5 | |
| | --- | | |
| A | GB-A-1 593 853 (PALMER)<br>* Page 1, ligne 8 - page 4, ligne 40 * | 2 | |
| | --- | | |
| A | IEEE TRANSACTIONS ON BROADCASTING, vol. BC-19, no. 3, septembre 1973, pages 63-67, New York, US; P. LAPPALAINEN: "Digital circle-pattern generator for TV"<br>* Page 64, colonne de gauche, alinéas 1-5 * | 2 | |
| | --- | | |
| A | US-A-4 255 761 (KNOP)<br>* Colonne 6, ligne 40 - colonne 7, ligne 10 * | 4 | DOMAINES TECHNIQUES RECHERCHES (Int. Cl.4)<br><br>H 04 N |
| | --- | | |
| A | FR-A-2 007 849 (HELL)<br>* Page 2, ligne 18 - page 3, ligne 12 * | 6 | |
| | --- | | |
| A | US-A-3 259 690 (OSHIMA)<br>* Colonne 1, lignes 37-68 * | 6 | |
| | --- | | |
| A | FR-A-2 441 198 (HELL) | 6 | |
| | ----- | | |

**Le présent rapport a été établi pour toutes les revendications**

| Lieu de la recherche | Date d'achèvement de la recherche | Examinateur |
|---|---|---|
| LA HAYE | 04-01-1988 | DE ROECK A.F.A. |